## Europäisches Patentamt
## European Patent Office
## Office européen des brevets

(19)

(11) Veröffentlichungsnummer: **0 018 660**
**A1**

(12)

# EUROPÄISCHE PATENTANMELDUNG

(21) Anmeldenummer: **80102434.0**

(22) Anmeldetag: **05.05.80**

(51) Int. Cl.³: **B 60 P 3/00**
**B 64 F 1/31**

(30) Priorität: **04.05.79 DE 2917959**

(43) Veröffentlichungstag der Anmeldung:
**12.11.80 Patentblatt 80/23**

(84) Benannte Vertragsstaaten:
**AT BE CH DE FR GB IT LI LU NL SE**

(71) Anmelder: **Trepel AG**
**Alte Schmelze 18-22 Trepelhaus**
**D-6200 Wiesbaden-Schierstein(DE)**

(72) Erfinder: **Zurawsky, Werner**
**Anne-Frank-Strasse 9**
**D-6200 Wiesbaden(DE)**

(72) Erfinder: **Heinz, Dieter**
**Schwarzwaldstrasse 3**
**D-6204 Taunusstein 2(DE)**

(74) Vertreter: **Röbe-Oltmanns, Georg, Dr.**
**Dotzheimer Strasse 61**
**D-6200 Wiesbaden(DE)**

(54) **Versorgungsfahrzeug mit hydraulisch anhebbarer Kabine, insbesondere für den Flughafenbetrieb.**

(57) Versorgungsfahrzeug für den Flughafenbetrieb mit einer hinter dem Fahrerhaus (4) angeordneten, hydraulisch hebbaren Kabine (7) für Personen oder Güter, die an ihrer dem Fahrerhaus (4) zugewandten Stirnseite mit einer Übergangsbrücke (8) versehen ist, die ihrerseits an der Kabinen-Stirnseite (7) vertikal bewegbar ist.

Es wird vorgeschlagen, das Kabinendach mit einem in Richtung auf gas Flugzeug (10) verschiebbaren Wetterschutzdach (13) zu versehen, das über die Übergangsbrücke (8) vorschiebbar ist, und das auch über den Eingang am hinteren Ende der Kabine (7) vorschiebbar ist.

Die Erfindung betrifft ein Versorgungsfahrzeug, insbesondere für den Flughafenbetrieb, mit einem Fahrzeugchassis mit Fahrwerk, einem am Vorderende des Fahrzeugchassis angeordneten Fahrerhaus und eine hinter dem Fahrerhaus angeordneten und mittels auf dem Fahrzeugchassis angebrachte Hubscheren hydraulisch anhebbaren und absenkbaren Kabine für Personen und/oder Güterbeförderung, die zum Zweck des Andockens an eine zu bedienende, hochgelegene Ladeöffnung beispielsweise eines Flugzeuges, an ihrer dem Fahrerhaus zugewandten Stirnseite mit einer Übergangsbrücke versehen ist, die ihrerseits an der Stirnseite der Kabine auf- und abbewegbar ist, um bei angehobener Kabine eine Stellung einzunehmen, in der sie höhengleich mit dem Boden der Kabine ist, und um bei abgesenkter Kabine eine abgehobene Stellung einzunehmen, in der sie sich unmittelbar oberhalb des Fahrerhauses befindet.

Die am Vorderende der Kabine vorgesehene Übergangsbrücke dient dazu, die Kabine an die Ladeöffnung, beispielsweise eines Flugzeuges, anzudocken.

Die Übergangsbrücke erstreckt sich bis mindestens zum Vorderende des Fahrzeuges und ist einerseits erforderlich, da das Fahrzeug im allgemeinen nicht mit seinem Fahrerhaus unter das Flugzeug gefahren werden kann und es andererseits erwünscht ist, daß der Fahrer den Andockvorgang durch ein Dachfenster im Fahrerhaus selbst beobachten kann. Die Übergangsbrücke muß höhenverschiebbar an der Kabine angebracht wein, da die Brücke ansonsten beimAbsenken der Kabine auf das Chassis mit dem Fahrerhaus in Kollision geraten würde. Bevor also die Kabine aus ihrer angehobenen Andockposition abgesenkt wird, muß die Übergangsbrücke aus der Andockstellung, in der sie höhengleich mit dem Boden der Kabine ist, an der Kabine hochgefahren werden, damit das Fahrerhaus

4

unter der Übergangsbrücke Platz hat.

Diese Maßnahme bedingt, daß die Übergangsbrücke bestenfalls mit Seitengeländer, nicht aber mit einer Überdachung versehen werden kann, da eine solche Überdachung bei an der Kabine hochgefahrener Übergangsbrücke die zulässige bzw. erwünschte Flugzeughöhe bei abgesenkter Kabine überschreiten würde.Dennoch ist es häufig erwünscht, den Anschlußübergang von der Kabine zu beispielsweise der Flugzeugöffnung gegen Wettereinflüsse zu schützen. Dies kann sowohl im Falle des Personentransportes als auch im Falle des Gütertransportes bzw. der Flugzeugversorgung erwünscht oder sogar notwendig sein.

Der Erfindung liegt die Aufgabe zugrunde, ein Versorgungsfahrzeug der eingangs bezeichneten Art zu schaffen, bei dem der durch die Übergangsbrücke gebildete Übergang von der Fahrzeugkabine zum Flugzeug durch eine Überdachung gegen Wettereinflüsse geschützt werden kann.

Diese Aufgabe wird erfindungsgemäß dadurch gelöst, daß ein auf dem Kabinendach in Richtung der Fahrzeuglängsachse verschiebbares Wetterschutzdach vorgesehen ist, welches über die Übergangsbrücke vorschiebbar ist, wenn sich diese in ihrer abgesenkten Stellung an der Kabine befindet.

Bei einer derartigen Ausbildung des Fahrzeuges braucht das Wetterschutzdach über der Übergangsbrücke nicht zusammen mit dieser an der Kabine hochgefahren zu werden, sondern muß lediglich auf dem Kabinendach zurückgeschoben werden, bevor die Übergangsbrücke an der Kabine hochgefahren wird.

Bei einer besonders bevorzugten Ausführungsform des Fahrzeuges ist das Wetterschutzdach so gestaltet, daß es wahlweise auch bis über das hintere Ende der Kabine

5

hinausgefahren werden kann, um beim Beladen und Begehen der Kabine im abgesenkten Zustand, das im allgemeinen vom Hinterende der Kabine aus erfolgt, Schutz gegen Wettereinflüsse zu bieten.

Im folgenden wird die Erfindung anhand der einzigen beigefügten Zeichnung am Beispiel eines Behindertenfahrzeuges im einzelnen noch näher erläutert.

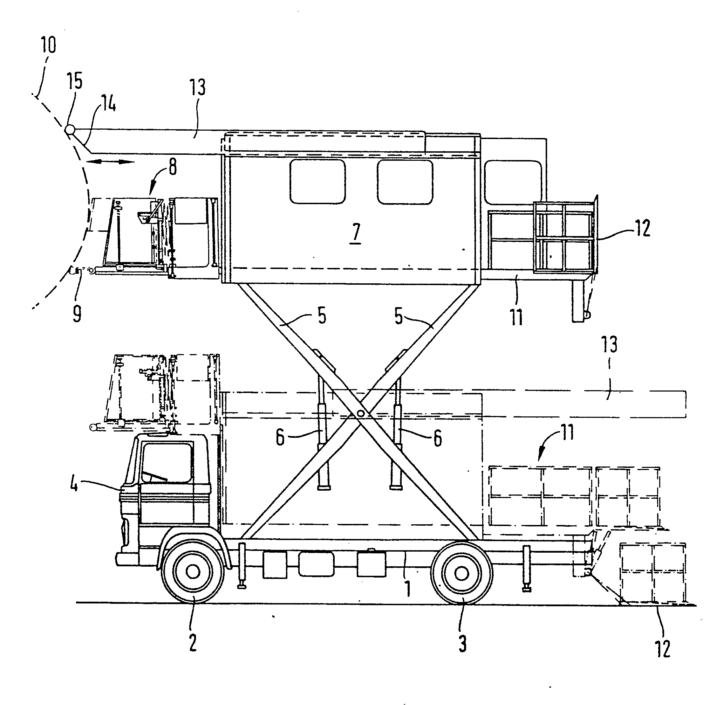

Das in der Zeichnung dargestellte Grundfahrzeug ist ein handelsübliches Lastkraftfahrzeug mit einem Chassis 1, Vorder- und Hinterrädern 2 bzw. 3 und einem oberhalb der Vorderräder 2 auf dem Fahrzeugchassis 1 angeordneten Fahrerhaus 4. Die übrigen Aufbauten des Fahrzeuges sind in ausgezogenen Linien in angehobenem Zustand gezeigt und in strich-punktierten Linien im abgesenkten Zustand angedeutet.

Auf dem Fahrzeugchassis 1 sind zwei Hubscheren 5 (in der Seitenansicht ist nur eine der Hubscheren sichtbar) angeordnet, die mittels hydraulischer Hubzylinder 6 ausfahrbar und absenkbar sind.

Die oberen Enden der Hubscheren 5 tragen die Kabine 7 des Fahrzeuges. Am Vorderende der Kabine 7 oberhalb des Fahrerhauses 4 ist eine Übergangsbrücke 8 angebracht, die am Vorderende der Kabine hochfahrbar und bis auf deren Bodenhöhe absenkbar ist. Die Übergangsbrücke 8 ist um einen gewissen Betrag ausziehbar, wie dies bei 9 angedeutet ist, um bei angehobener Kabine 7 an die Öffnung eines Flugzeuges angeschlossen werden zu können, dessen Rumpf durch die Umfangslinie 10 angedeutet ist. Am hinteren Ende ist die Kabine 7 mit einer Zugangsplattform 11 versehen, die, wie am besten aus der strichpunktierten Darstellung im abgesenkten Zustand der Kabine hervorgeht, über eine hydraulisch anhebbare und absenkbare Liftplattform 12 verfügt, die den besonderen Belangen des Behindertentransportes dient, und die im abgehobenen Zustand der Kabine hochgeklappt werden kann, um einen hinteren Abschluß für die Zugangsplattform 11 zu bieten.

Auf dem Dach der Kabine 7 ist ein in Richtung der Fahrzeugachse verschiebbares Wetterschutzdach 13 angeordnet, welches die seitlichen Oberkanten der Kabine 7 etwas umgreift. Bei der mit ausgezogenen Linien angehoben dargestellten Kabine ist das Wetterschutzdach 13 in Richtung auf den Flugzeugrumpf 10 über das Vorderende der Kabine hinaus vorgeschoben und überdacht die Übergangsbrücke 8. Die Vorderkante 14 des Wetterschutzdaches ist unten abgeschrägt, damit sich das Wetterschutzdach mit seinem Ende besser an einen gekrümmten Flugzeugrumpf anpassen läßt. Ein Gummischlauch 15 dient für den unmittelbaren Anschluß.

Bevor die Kabine 7 abgesenkt wird, muß zuerst das Wetterschutzdach 13 ganz auf die Kabine zurückgefahren werden, worauf dann die Übergangsbrücke 8 an der Vorderseite der Kabine hochgefahren werden muß, damit die Kabine ohne mit dem Fahrerhaus 4 in Kollision zu geraten, bis auf das Chassis abgesenkt werden kann.

In der den abgesenkten Zustand der Kabine darstellenden strich-punktierten Darstellung ist das Wetterschutzdach 13 nach hinten bis über das Ende der Zugangsplattform 11 hinausgefahren und überdacht zusätzlich noch die Liftplattform 12.

Da im angehobenen Zustand der Kabine 7 jeweils nur der Vorderzugang und im abgesenkten Zustand der Kabine jeweils nur der hintere Zugang benutzt werden, kann das Wetterschutzdach vorteilhafterweise wahlweise in eine solche Position verfahren werden, daß es entweder den einen oder den anderen Zugang überdacht. Dadurch wird auf einfachste Weise für beide Zugänge ein Wetterschutz erreicht. An der Übergangsbrücke 8 könnte ohnehin kein getrenntes Schutzdach angebracht werden, welches die Seitengeländer der Übergangsbrücke noch an Höhe überschreitet, die im abgesenkten Zustand der Kabine 7 selbst schon über deren Oberkante hinaus ragen.

1

1

P a t e n t a n s p r ü c h e :
=================================

1.) Versorgungsfahrzeug, insbesondere für den Flughafenbetrieb mit einem Fahrzeugchassis mit Fahrwerk, einem
am Vorderende des Fahrzeugchassis angeordneten Fahrerhaus und einer hinter dem Fahrerhaus angeordnete
und mittels auf dem Fahrzeugchassis angebrachten
Hubscheren hydraulisch anhebbaren und absenkbaren Kabine für Personen und/oder Güterbeförderung, die zum
Zweck des Andockens an eine zu bedienende, hochgelegene Ladeöffnung, beispielsweise eines Flugzeuges,
an ihrer dem Fahrerhaus zugewandten Stirnseite mit
einer Übergangsbrücke versehen ist, die ihrerseits
an der Stirnseite der Kabine auf- und abbewegbar ist,
um bei angehobener Kabine eine Stellung einzunehmen,
in der sie höhengleich mit dem Boden der Kabine ist,
und um bei abgesenkter Kabine eine angehobene Stellung einzunehmen, in der sie sich unmittelbar oberhalb des Fahrerhauses befindet, dadurch gekennzeichnet,
daß ein auf dem Kabinendach in Richtung der Fahrzeuglängsachse verschiebbares Wetterschutzdach (13) vorgesehen ist, welches über die Übergangsbrücke (8)
vorschiebbar ist, wenn sich diese in ihrer abgesenkten Stellung an der Kabine (7) befindet.

2.) Versorgungsfahrzeug nach Anspruch 1, dadurch gekennzeichnet, daß das Wetterschutzdach (13) wahlweise
über den Eingang (11) am hinteren Ende der Kabine
(7) vorschiebbar ist.

**Europäisches Patentamt**

# EUROPÄISCHER RECHERCHENBERICHT

Nummer der Anmeldung

EP 80 10 2434.0

| | EINSCHLÄGIGE DOKUMENTE | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| X | US - A - 3 664 456 (SMITH, SR. et al.)<br>* Spalte 15, Zeile 33 bis Spalte 16, Zeile 34; Fig. 22 *<br>--- | 1 | B 60 P  3/00<br>B 64 F  1/31 |
| A | DE - A1 - 2 743 150 (TREPEL)<br>---- | | |

**RECHERCHIERTE SACHGEBIETE (Int. Cl.)**

B 60 P  3/00

B 64 F  1/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 09-07-1980 | LUDWIG |